# FASCICULE DE BREVET EUROPEEN

(11) **EP 2 767 357 B1**
(45) Date de publication et mention de la délivrance du brevet: **03.10.2018**
(21) Numéro de dépôt: 14305171.2
(22) Date de dépôt: 10.02.2014
(51) Int. Cl.: B23C 3/02

(54) **Procédé d'usinage d'un trou débouchant dans une pièce et dispositif d'usinage utilisé pour la mise en oeuvre dudit procédé**
Maschinelles Fertigungsverfahren eines Lochs, das in ein Werkstück mündet, und Fertigungsvorrichtung für die Umsetzung dieses Verfahrens
Method for machining a through hole in a part and machining device used for implementing said method

(30) Priorité: 13.02.2013 FR 1351219
(43) Date de publication de la demande: 20.08.2014
(73) Titulaire: Airbus Opérations SAS, 31060 Toulouse (FR)
(72) Inventeur: De Mattia, Denis, 44115 BASSE GOULAINE (FR); Batard, Gilles, 44640 ROUANS (FR)
(74) Mandataire: Fantin, Laurent

(56) Documents cités:
- EP-A1- 1 103 341
- EP-B1- 1 417 067

## Description

La présente invention se rapporte à un procédé d'usinage d'un trou débouchant dans une pièce ainsi qu'à un dispositif d'usinage utilisé pour sa mise en oeuvre, ledit procédé d'usinage étant plus particulièrement adapté pour les pièces en matériau composite.

Dans le domaine aéronautique, de nombreuses pièces d'un aéronef sont réalisées en matériau composite afin de réduire la masse embarquée et de la sorte la consommation énergétique de l'aéronef. A titre d'exemple, les cadres orbitaux du fuselage, les lisses ainsi que les panneaux du fuselage peuvent être réalisés en matériau composite.

Certaines de ces pièces en matériau composite doivent être usinées pour réaliser entre autres des trous débouchants, utilisés notamment pour l'assemblage des pièces entre elles.

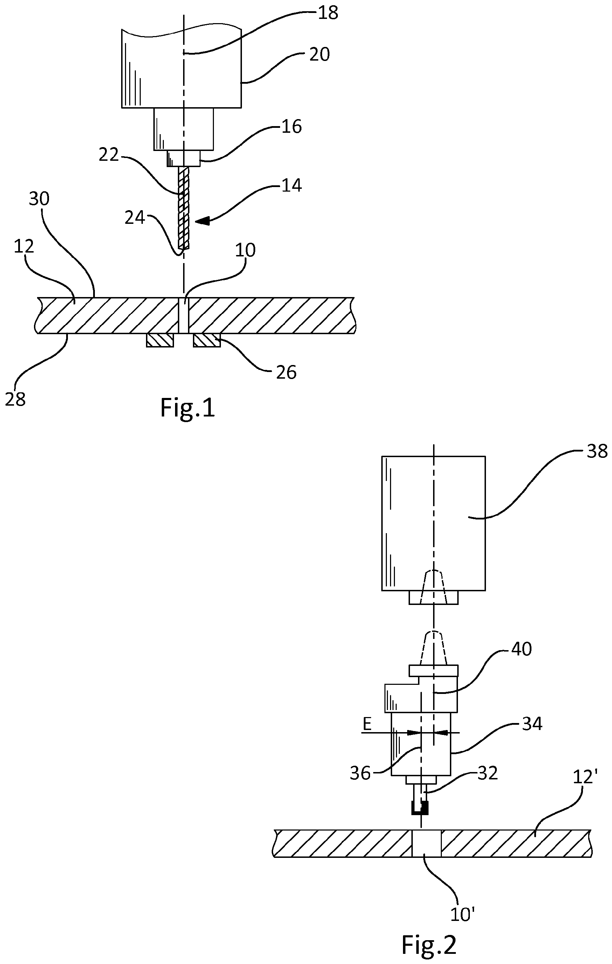

Selon un premier mode opératoire, illustré sur la figure 1, un trou débouchant 10 peut être réalisé dans une pièce 12 par perçage, en utilisant un foret 14 solidaire d'un porte outil 16 qui pivote selon un axe de rotation 18 par rapport à une machine-outil 20. Selon ce mode opératoire, l'axe 22 du foret 14 est confondu avec l'axe de rotation 18 et l'usinage découle de la combinaison d'un mouvement de rotation du foret 14 selon son axe 22 et d'un mouvement d'avance du foret selon une direction parallèle à l'axe 22.

Lors du perçage, tant que le point central 24 de l'extrémité du foret 14 n'a pas débouché, le foret 14 exerce à l'encontre de la pièce 12 des efforts axiaux (selon l'axe 22) importants du fait que la vitesse du point central 24 dans un plan perpendiculaire à l'axe 22 est nulle. Ces efforts axiaux s'annulent dès que le point central 24 débouche.

Lorsque le perçage est réalisé dans une paroi mince de la pièce 12 qui peut se déformer de manière élastique en raison des efforts axiaux, il est nécessaire de prévoir un outillage 26 de type « serre flanc » pour assurer la reprise des efforts axiaux et limiter les déformations de la pièce. Cet outillage 26 vient en contact, au plus près du bord du trou débouchant 10, avec la surface 28 de la pièce 12 opposée à la surface 30 via laquelle pénètre le foret 14.

Cet outillage 26 permet lors du perçage :
- d'éviter la déformation de la pièce en flexion susceptible d'engendrer la non-conformité du trou sur le plan géométrique,
- d'annuler le retour élastique de la pièce lorsque le foret débouche susceptible d'engendrer des phénomènes de délaminage et d'écaillage au bord du trou dans le cas d'un matériau composite.

L'utilisation d'un outillage 26 de type « serre flanc » n'est pas pleinement satisfaisant car il est nécessaire de coordonner les mouvements des parties disposées de part et d'autre de la pièce et de les positionner correctement l'une par rapport à l'autre, ce qui tend à complexifier la gestion des déplacements de l'outillage.

Pour certaines pièces, compte tenu de leurs géométries, il peut s'avérer impossible de positionner un outillage au niveau de la surface 28 opposée à la surface 30 via laquelle pénètre le foret 14.

Selon un autre mode opératoire, illustré sur la figure 2, un trou débouchant 10' peut être réalisé dans une pièce 12' grâce à la technique de perçage orbital.

Dans ce cas, on utilise une fraise 32 deux tailles solidarisée à une électro-broche 34 qui assure la rotation de la fraise 32 selon un premier axe de rotation 36. L'électro-broche 34 est solidarisée à une machine-outil 38 qui l'entraine en rotation selon un second axe de rotation 40. Le premier axe de rotation 36 est parallèle et excentré par rapport au second axe de rotation 40. Ainsi, le diamètre du trou débouchant 10' est fonction du diamètre de la fraise 32 et de l'excentration E entre les deux axes de rotation 36 et 40.

Selon ce mode opératoire, l'électro-broche 34 assure la mise en rotation de la fraise 32 à de grandes vitesses de rotation relevant de l'Usinage à Grande Vitesse UGV. La machine-outil 38 assure le mouvement d'avance selon la direction de l'axe 40 et le mouvement orbital du premier axe de rotation 36.

Ce deuxième mode opératoire ne nécessite pas l'utilisation d'un outillage de type « serre-flanc » car les efforts axiaux sont réduits du fait qu'aucun point de l'extrémité de la fraise n'a une vitesse nulle dans un plan perpendiculaire à l'axe 36.

Cependant, ce deuxième mode opératoire n'est pas pleinement satisfaisant en raison d'une productivité réduite.

En effet, l'excentration entre les deux axes 36 et 40 devant être réglable pour ajuster le diamètre du trou débouchant, l'électro-broche 34 ne peut pas être équilibrée. Par conséquent, sa vitesse de rotation selon le deuxième axe de rotation doit être réduite (au maximum 200 tr/min) pour limiter l'apparition de phénomènes vibratoires.

Le document EP1417067B1 divulgue un procédé d'usinage d'un trou débouchant dans une paroi d'une pièce ayant les caractéristiques du préambule de la revendication 1 et un dispositif d'usinage d'un trou débouchant ayant les caractéristiques du préambule de la revendication 9.

Aussi, la présente invention vise à remédier les inconvénients de l'art antérieur. A cet effet, l'invention a pour objet un procédé d'usinage d'un trou débouchant dans une paroi d'une pièce selon la revendication indépendante 1 et un dispositif d'usinage d'un trou débouchant selon la revendication indépendante 9.
Des caractéristiques avantageuses sont définies dans les revendications dépendantes.

D'autres caractéristiques et avantages ressortiront de la description qui va suivre de l'invention, description donnée à titre d'exemple uniquement, en regard des dessins annexés sur lesquels :
- La figure 1 est un schéma illustrant un perçage avec un foret selon l'art antérieur,
- La figure 2 est un schéma illustrant un perçage de type orbital selon l'art antérieur,
- La figure 3 est un schéma d'un dispositif d'usinage d'un trou débouchant qui illustre l'invention,
- La figure 4 est une vue latérale d'une fraise deux tailles,
- La figure 5 est une coupe verticale d'un dispositif d'usinage qui illustre un mode de réalisation de l'invention.

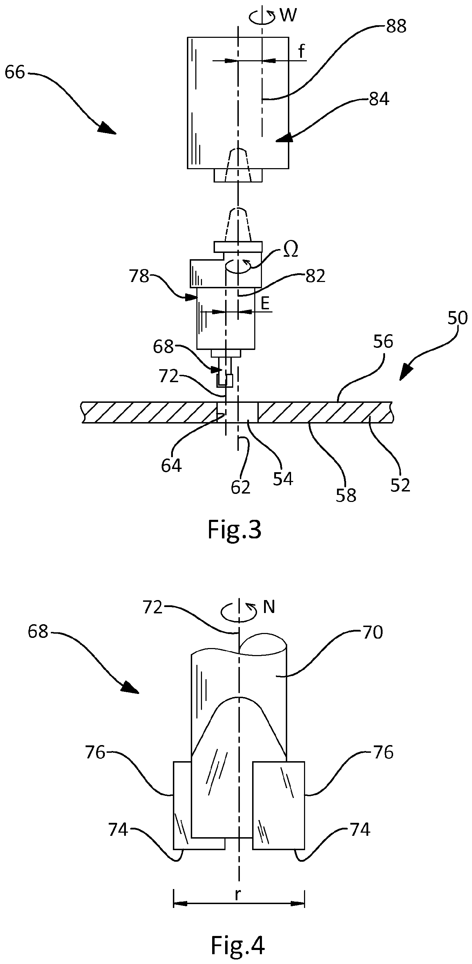

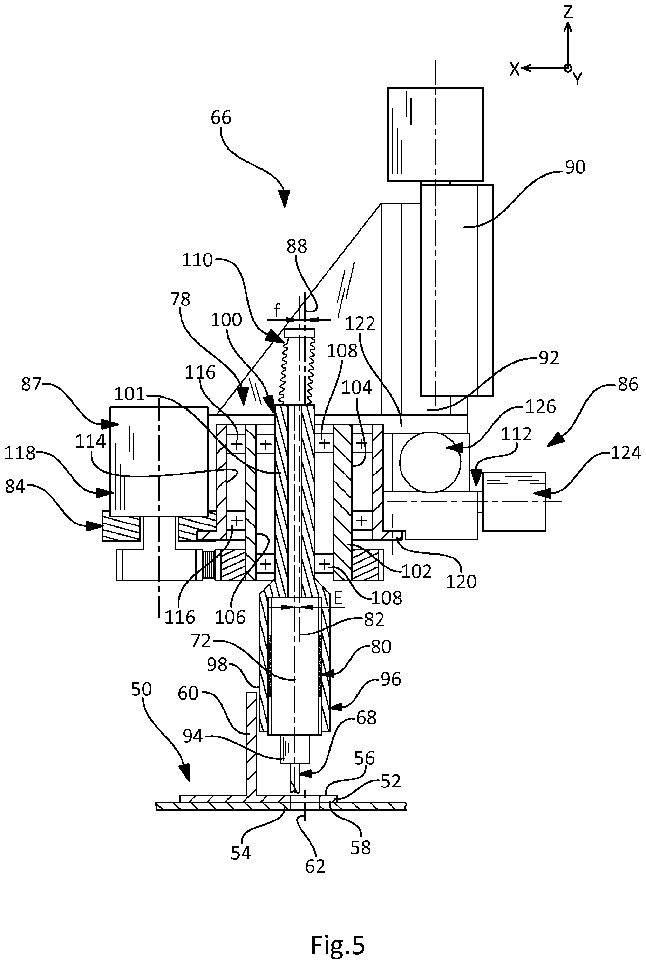

Sur les figures 3 et 5, on a représenté une pièce 50 qui comprend une paroi 52 dans laquelle un trou 54 doit être réalisé, ledit trou 54 débouchant au niveau d'une première surface 56 et d'une seconde surface 58. Eventuellement, la pièce 50 comprend un raidisseur 60 (visible sur la figure 5) qui s'étend à partir de la première surface 56 à proximité du trou 54.

Selon une application, la pièce 50 est en matériau composite et comprend par exemple un empilage de nappes de fibres noyées dans une matrice de résine. Bien entendu, l'invention n'est pas limitée à cette application et peut convenir à des pièces métalliques ou réalisées en un autre matériau.

A titre d'exemple, la pièce 50 fait partie d'un aéronef, comme par exemple un cadre d'un fuselage, des lisses, des panneaux de fuselage.

Le trou 54 est défini par un axe 62, généralement perpendiculaire à la première surface 56 et par une surface de révolution 64 par rapport audit axe 62 qui peut être cylindrique. Cependant, l'invention n'est pas limitée à cette géométrie. Ainsi, le trou peut comprendre un fraisage dans la partie qui débouche sur la première surface 56.

Afin de pouvoir l'usiner, la pièce 50 est immobilisée sur un support par tous moyens appropriés. A titre d'exemple, elle peut être bridée sur un châssis ou une table d'usinage. Les moyens pour immobiliser la pièce 50 ne sont pas plus décrits car ils sont connus de l'homme du métier.

Pour réaliser le trou 54, on utilise un dispositif d'usinage 66 qui comprend un outil de coupe 68 qui interagit avec la pièce 50.

Comme illustré sur la figure 4, l'outil de coupe 68 est une fraise deux tailles 70 de rayon r. Pour donner un ordre de grandeur, le rayon r est de l'ordre de quelques millimètres.

La fraise deux tailles 70 n'est pas plus décrite car elle est connue de l'homme du métier et peut être identique à celles utilisées pour le perçage orbital. L'invention n'est pas limitée à ce type d'outil de coupe 68. De manière générale, l'outil de coupe 68 comprend un axe 72 de rotation, au moins une première arête de coupe 74 qui est parallèle ou faiblement inclinée (quelques degrés) par rapport à un plan perpendiculaire à l'axe 72 et au moins une seconde arête de coupe 76 qui est parallèle ou faiblement inclinée (quelques degrés) par rapport à l'axe 72.

Le dispositif d'usinage 66 comprend un premier support intermédiaire 78 auquel est solidarisé l'outil de coupe 68, le premier support intermédiaire 78 autorisant un mouvement de rotation dudit outil de coupe 68 selon son axe 72, ainsi que des premiers moyens 80 pour engendrer le mouvement de rotation de l'outil de coupe 68 selon son axe 72. La vitesse de rotation de l'outil de coupe 68 selon son axe 72 est notée N.

Le premier support intermédiaire 78 comprend un premier axe de rotation orbital 82 qui est parallèle à l'axe 72 de l'outil et excentré par rapport à ce dernier d'une distance appelée excentration E. Pour des raisons de lisibilité le rapport entre E et r n'est pas respecté sur les figures 3 et 5.

Contrairement à l'art antérieur, l'excentration E n'est pas ajustable par l'opérateur. Elle a une valeur déterminée à sa fabrication qui peut varier d'un support intermédiaire à l'autre mais qui est fixe à l'usage. Selon un point important de l'invention, l'excentration E est fixe un dispositif d'usinage donné. Ainsi, il est possible de parfaitement équilibrer statiquement et/ou dynamiquement le premier support intermédiaire 78. De la sorte, le premier support intermédiaire 78 peut être mis en rotation autour du premier axe de rotation orbital 82 a des vitesses de rotation élevées, par exemple de l'ordre de 1000 tr/min, contribuant à améliorer la productivité.

Pour donner un ordre de grandeur, E est égal à approximativement 0,2 fois r.

Le dispositif d'usinage 66 comprend également un deuxième support intermédiaire 84 auquel est solidarisé le premier support intermédiaire 78, le deuxième support intermédiaire 84 autorisant un mouvement de rotation dudit premier support intermédiaire 78 selon le premier axe de rotation orbital 82, ainsi que des deuxièmes moyens 87 pour engendrer le mouvement de rotation du premier support intermédiaire 78 selon le premier axe de rotation orbital 82. La vitesse de rotation du premier support intermédiaire 78 selon l'axe de rotation orbital 82 est notée Ω.

Selon un mode de réalisation, le dispositif d'usinage comprend des moyens pour que l'outil de coupe 68 se translate selon la direction de l'axe de rotation 72 afin de réaliser le trou 54. En variante, la pièce 50 pourrait se translater selon la direction de l'axe de rotation 72. Dans tous les cas, il existe un mouvement relatif entre la pièce 50 et l'outil de coupe 68 appelé mouvement d'avance pour réaliser le trou 54.

Selon une caractéristique importante de l'invention, le dispositif d'usinage comprend des moyens 86 pour engendrer un mouvement de rotation du deuxième support intermédiaire 84 autour d'un second axe de rotation orbital 88 parallèle au premier axe de rotation orbital 82 et excentré par rapport à ce dernier d'une distance f. Ce second axe de rotation orbital 88 est confondu avec l'axe 62 du trou 54 à réaliser. La distance f est réglable en fonction du trou à réaliser. De plus elle est indépendante de l'excentration E. Ainsi, la variation de f n'engendre pas de modification de l'excentration E.

Après réglage, la valeur de la distance f est conservée fixe sur un tour de manière à obtenir un trou avec une périphérie circulaire.

Pour des raisons de lisibilité les rapports entre E et f, r et f ne sont pas respectés sur les figures 3 et 5. La vitesse de rotation du deuxième support intermédiaire 84 selon le second axe de rotation orbital 88 est notée W.

Pour donner un ordre de grandeur, f a une valeur de l'ordre de quelques dixièmes de millimètres.

Selon l'invention, le rayon R du trou 54 est égal à r+E+f.

Ainsi, le procédé d'usinage d'un trou 54 débouchant dans une pièce 50 comprend :
- i) mettre en rotation l'outil de coupe 68 de rayon r selon son axe 72 de rotation,
- ii) mettre en rotation l'axe 72 de rotation de l'outil autour du premier axe de rotation orbital 82 parallèle et excentré d'une valeur E par rapport à l'axe 72 de rotation de l'outil,
- iii) réaliser un mouvement relatif entre l'outil 68 et la pièce 50 selon une direction parallèle à l'axe 72 de rotation de l'outil,
- iv) mettre en rotation le premier axe de rotation orbital 82, sur au moins un tour, autour du second axe de rotation orbital 88 parallèle et excentré d'une valeur f par rapport au premier axe de rotation orbital 82,
- v) retirer l'outil de coupe 68 du trou 54 débouchant.

Comme indiqué précédemment, la valeur de l'excentration E est fixe ce qui permet d'équilibrer de manière statique et/ou dynamique le premier support intermédiaire 78. Ainsi, il est possible d'imposer au premier support intermédiaire 78 des vitesses de rotation Ω selon le premier axe de rotation orbital 82 nettement supérieures à celles de l'art antérieur, ce qui contribue à augmenter significativement la productivité.

Les étapes i, ii et iii permettent de réaliser un avant-trou en réduisant les risques de délaminage. Lors de ces étapes, l'enlèvement de matière est généré essentiellement par la ou les première(s) arête(s) de coupe 74.

L'étape iv permet de calibrer le trou 54. Lors de cette étape, l'enlèvement de matière est généré par la ou les seconde(s) arête(s) de coupe 76.

Ainsi, contrairement à l'art antérieur, une usure de la ou des première(s) arête(s) de coupe 74 prévue(s) à l'extrémité de l'outil de coupe n'induit pas un non-respect des tolérances dimensionnelles du trou 54. Ainsi, selon l'invention, chaque type d'arête de coupe est utilisé de manière optimale, la ou les première(s) arête(s) de coupe 74 pour la problématique de délaminage et la ou les seconde(s) arête(s) de coupe 76 pour la géométrie du trou.

Cela conduit à augmenter significativement la durée de vie de l'outil de coupe. Ainsi, l'outil de coupe 68 est déclaré « usé » lorsque la ou les première(s) arête(s) de coupe 74 provoque(nt) du délaminage soit environ tous les 3000 trous, ou lorsque la ou les seconde(s) arête(s) de coupe 76 provoque(nt) une mauvaise géométrie du trou soit environ tous les 10000 trous.

Selon une première variante, l'étape iv est déclenchée uniquement lorsque les étapes i, ii et iii ont permis de réaliser un avant trou débouchant. Dans ce cas, l'étape iv n'est opérée que sur un tour ou légèrement plus de manière à définir la géométrie du trou 54.

Selon une autre variante, l'étape iv est déclenchée dès le début du cycle de perçage avant le déclenchement de l'étape iii. Cette variante est plus particulièrement adaptée pour les trous 54 avec une hauteur importante, supérieure à la longueur de la ou des seconde(s) arête(s) de coupe 76. Ainsi, il n'est pas nécessaire de prévoir un outil de coupe 68 avec une ou des seconde(s) arête(s) de coupe 76 avec une longueur supérieure à la hauteur du trou à réaliser.

Selon une autre variante, l'étape iv est déclenchée à la fin du cycle de perçage, après la réalisation d'un avant-trou, juste avant l'étape v. Dans ce cas, la géométrie du trou est définie lors du retrait de l'outil de coupe. Cette variante est plus particulièrement adaptée pour les trous 54 avec une hauteur importante, supérieure à la longueur de la ou des seconde(s) arête(s) de coupe 76. Ainsi, il n'est pas nécessaire de prévoir un outil de coupe 68 avec une ou des seconde(s) arête(s) de coupe 76 avec une longueur supérieure à la hauteur du trou à réaliser.

Pour réaliser un trou, le rayon r étant imposé par la géométrie de l'outil de coupe 68 et l'excentration E étant fixe, le diamètre du trou R est déterminé en ajustant la valeur de l'excentration f.

Préalablement à la réalisation d'un trou 54 ou d'une série de trous 54, le procédé d'usinage comprend une étape préalable consistant à déterminer la valeur exacte de (E+r).

Selon une première variante, pour déterminer la valeur exacte de (E+r), on usine un trou avec f=0 dans une éprouvette puis on mesure le diamètre du trou. La valeur exacte de (E+r) est égale à la moitié de la valeur du diamètre mesuré. Selon une deuxième variante, pour déterminer la valeur exacte de (E+r), on utilise une technique optique telle que l'ombroscopie par exemple.

Dans le cas, d'un dispositif d'usinage à commande numérique, connaissant la valeur exacte de (E+r) et le rayon du trou R, la machine peut déterminer la valeur de f et donc la trajectoire du premier axe de rotation orbital 82.

Avantageusement, la vitesse de rotation N est nettement supérieure à la vitesse de rotation Ω qui est elle-même nettement supérieure à la vitesse de rotation W. Cette caractéristique permet d'obtenir un bon état de surface de l'alésage. De préférence, la vitesse de rotation N est supérieure ou égale à 40 fois Ω.

De préférence, la vitesse de rotation Ω est supérieure ou égale à 40 fois W. Avantageusement, le dispositif d'usinage 66 comprend un châssis 90, un troisième support intermédiaire 92 relié au châssis 90 par une liaison autorisant un mouvement de translation selon une direction Z parallèle à l'axe 72 de rotation de l'outil. Le second support intermédiaire 84 est relié au troisième support intermédiaire 92 par une liaison autorisant deux mouvements de translation selon deux axes X et Y perpendiculaires entre eux et perpendiculaires à la direction de l'axe de rotation 72 de l'outil. Dans ce cas, la mise en rotation du deuxième support intermédiaire 84 selon le second axe de rotation orbital 88 découle de mouvements coordonnés des axes X et Y de manière à faire décrire au premier axe orbital 82 un cercle de rayon f avec une vitesse de rotation W.

Selon un premier mode de réalisation illustré sur la figure 5, l'outil de coupe 68 est monté sur un porte-outil 94 qui est lui-même monté sur une électro-broche 96. Le porte-outil 94 permet d'accoupler de manière démontable l'outil de coupe 68 à l'électro-broche 96. Il n'est pas détaillé car il est connu de l'homme du métier.

L'électro-broche 96 assure la fonction des moyens 80 pour engendrer le mouvement de rotation de l'outil de coupe 68 selon son axe 72. Selon un mode de réalisation l'électro-broche 96 comprend un corps cylindrique 98 avec à une première extrémité des premiers moyens d'accouplement pour solidariser le porte-outil 94 à l'électro-broche et à une seconde extrémité des seconds moyens d'accouplement 100.

De préférence, le corps cylindrique 98 a un diamètre réduit de l'ordre de 25 mm, déporté par rapport aux autres éléments du dispositif d'usinage pour pouvoir réaliser des trous 50 à proximité d'un raidisseur 60.

Selon un mode de réalisation, les premiers moyens d'accouplement et les seconds moyens d'accouplement sont excentrés, comme illustré sur la figure 3.

Selon un mode de réalisation, les premiers moyens d'accouplement et les seconds moyens d'accouplement sont coaxiaux, comme illustré sur la figure 5. Cette configuration permet d'utiliser une électro-broche 96 parfaitement équilibrée de manière dynamique et statique.

Selon un mode de réalisation, les seconds moyens d'accouplement comprennent une queue 101 avec une portée cylindrique qui s'étend à partir de la seconde extrémité du corps cylindrique 98 de l'électro-broche 96.

Le dispositif d'usinage 66 comprend également une bague excentrique 102. Cette bague excentrique 102 comprend une paroi extérieure 104 cylindrique avec un axe qui correspond au premier axe de rotation orbital 82 et un alésage 106 qui a un axe coaxial à l'axe 72 de rotation de l'outil parallèle et excentré d'une valeur d'excentration E par rapport à l'axe de la paroi extérieure 104.

Les moyens d'accouplement 100 de l'électro-broche 96 sont montés pivotant dans l'alésage 106, grâce à des roulements 108 par exemple. En complément, l'électro-broche 96 comprend un système anti-rotation 110 pour ne pas pivoter sur elle-même et imposer un mouvement de rotation à l'outil de coupe 68. Selon un mode de réalisation, la queue 101 de l'électro-broche est reliée par un tube flexible, rigide en torsion, au châssis 90.

L'ensemble comprenant l'électro-broche 96 et la bague excentrique 102 forme le premier support intermédiaire 78. Cet ensemble est équilibré sur le plan statique et dynamique. Selon un mode opératoire, il est possible d'équilibrer séparément l'électro-broche 96 et la bague excentrique 102. Ainsi, l'électro-broche 96 est équilibrée de manière statique en ajoutant ou en retirant de la matière afin que son centre de gravité soit disposé sur l'axe de rotation orbital 82. L'électro-broche 96 est équilibrée de manière dynamique en faisant coïncider son axe principal d'inertie avec l'axe de rotation orbital 82 en respectant au mieux la symétrie axiale des masses. On procède de la même manière pour la bague excentrique 102.

Le dispositif d'usinage 66 comprend également une table 112 à mouvements croisés. Cette dernière comprend un alésage 114 dans lequel est montée pivotante la bague excentrique 102, grâce à des roulements 116 par exemple, et une motorisation 118 (qui correspond aux deuxièmes moyens 87) pour entrainer en rotation la bague excentrique 102, par exemple via un ensemble de pignon/courroie/couronne.

La table 112 à mouvements croisés comprend deux parties 120 et 122 mobiles l'une par rapport à l'autre selon deux axes linéaires perpendiculaires entre eux et perpendiculaires aux axes 72 et 82. Une première motorisation 124 assure la translation selon la direction X et une seconde motorisation 126 assure la translation selon la direction Y. Ces deux motorisations 124 et 126 assurent la mise en rotation du premier axe de rotation orbital 82 qui décrit un cercle centré sur le second axe de rotation orbital 88 confondu avec l'axe 62 du trou avec un rayon f fonction du diamètre du trou 54 à réaliser. A titre indicatif, les courses selon les deux axes X et Y sont faibles de 2 à 10 mm environ et les motorisations 124 et 126 permettent d'atteindre une vitesse de rotation W de l'ordre de 30 à 60 tr/min.

La première partie 120 de la table 112 comprend l'alésage 114 et la motorisation 118. Elle correspond au deuxième support intermédiaire 84.

La deuxième partie 122 de la table 112 correspond au troisième support intermédiaire 92.

Selon une première application, le dispositif d'usinage 66 correspond à un effecteur qui peut être fixé à l'extrémité d'un bras articulé. Dans cette application, le dispositif d'usinage peut comprendre tous moyens pour favoriser un positionnement précis de l'effecteur par rapport à la surface 56 de la pièce 50 dans un plan perpendiculaire à l'axe du trou 54 à réaliser et/ou pour ajuster de manière précise l'angle d'incidence entre l'axe 72 de l'outil de coupe 68 et la normale à la surface 56 de la pièce.

Selon une autre application, le dispositif d'usinage 66 peut être fixé sur une broche d'une machine-outil. Dans ce cas, en fonction des caractéristiques de la machine-outil et notamment de la précision des déplacements de sa broche dans un plan perpendiculaire à l'axe de la broche, la broche pourrait correspondre au troisième support intermédiaire 92.

Dans ce cas, la machine-outil assure le mouvement d'avance selon une direction parallèle à l'axe 72 de l'outil de coupe 68 ainsi que la gestion des mouvements de translation selon les axes X et Y de manière à assurer le déplacement du premier axe de rotation orbital 82 selon un cercle de rayon f.

## Revendications

1. Procédé d'usinage d'un trou débouchant (54) dans une paroi d'une pièce (50) consistant à :
- mettre en rotation sur lui-même un outil de coupe (68) de rayon r selon un axe de rotation (72),
- mettre en rotation ledit axe de rotation (72) de l'outil autour d'un premier axe de rotation orbital (82) parallèle et excentré d'une valeur d'excentration E fixe par rapport à l'axe de rotation (72) de l'outil,
- réaliser un mouvement relatif entre ledit outil de coupe (68) et ladite pièce (50) de manière à faire interagir ledit outil de coupe (68) avec ladite pièce (50) de manière à obtenir un trou débouchant,
- mettre en rotation le premier axe de rotation orbital (82) autour d'un second axe de rotation orbital (88) parallèle et excentré d'une distance f par rapport au premier axe de rotation orbital (82),
- utiliser un premier support intermédiaire (78) autorisant un mouvement de rotation de l'outil de coupe (68) selon son axe de rotation (72) et un deuxième support intermédiaire (84) autorisant un mouvement de rotation dudit premier support intermédiaire (78) selon le premier axe de rotation orbital (82),
- retirer l'outil de coupe (68) du trou (54) débouchant,
**caractérisé en ce que** ladite distance f est réglable en fonction du trou (52) à réaliser et indépendante de l'excentration (E), ladite distance f étant conservée fixe sur au moins un tour de manière à obtenir un trou avec une périphérie circulaire et **en ce que** le premier support intermédiaire (78) est équilibré de manière statique et/ou dynamique.

2. Procédé d'usinage d'un trou débouchant selon l'une des revendications précédentes, **caractérisé en ce que** la mise en rotation du deuxième support intermédiaire (84) selon le second axe de rotation orbital (88) consiste en des mouvements de translation coordonnés selon deux axes perpendiculaires entre eux et perpendiculaires à la direction de l'axe de rotation (72) de l'outil.

3. Procédé d'usinage d'un trou débouchant selon la revendication 1 ou 2, **caractérisé en ce qu'**il consiste à réaliser un avant-trou puis à mettre en rotation le premier axe de rotation orbital (82), sur au moins un tour, autour du second axe de rotation orbital (88).

4. Procédé d'usinage d'un trou débouchant selon la revendication 1 ou 2, **caractérisé en ce qu'**il consiste à mettre en rotation le premier axe de rotation orbital (82) autour du second axe de rotation orbital (88) avant de réaliser un mouvement relatif entre ledit outil de coupe (68) et ladite pièce (50) permettant à l'outil de coupe d'interagir avec ladite pièce (50).

5. Procédé d'usinage d'un trou débouchant selon la revendication 1 ou 2, **caractérisé en ce qu'**il consiste à mettre en rotation le premier axe de rotation orbital (82) autour du second axe de rotation orbital (88) après la réalisation d'un avant-trou, juste avant de retirer l'outil de coupe (68) du trou.

6. Procédé d'usinage d'un trou débouchant selon l'une des revendications précédentes, **caractérisé en ce que** la vitesse de rotation de l'outil de coupe (68) selon son axe de rotation (62) est supérieure ou égale à 40 fois la vitesse de rotation du premier support intermédiaire (78) selon le premier axe de rotation orbital (82).

7. Procédé d'usinage d'un trou débouchant selon l'une des revendications précédentes, **caractérisé en ce que** la vitesse de rotation du premier support intermédiaire (78) selon le premier axe de rotation orbital (82) est supérieure ou égale à 40 fois la vitesse de rotation du deuxième support intermédiaire (84) selon le second axe de rotation orbital (88).

8. Procédé d'usinage d'un trou débouchant selon l'une des revendications précédentes, **caractérisé en ce qu'**il comprend une étape préalable consistant à déterminer la valeur exacte de (E+r), avec r le rayon de l'outil de coupe (68) et E l'excentration entre l'axe de rotation (72) de l'outil et le premier axe de rotation orbital (82).

9. Dispositif d'usinage d'un trou débouchant comprenant :
- un outil de coupe (68) de rayon r avec un axe de rotation (72),
- un premier support intermédiaire (78) auquel est solidarisé l'outil de coupe (68), autorisant un mouvement de rotation dudit outil de coupe (68) selon son axe de rotation (72),
- des premiers moyens (80) pour engendrer le mouvement de rotation dudit outil de coupe (68) selon son axe de rotation (72),
- un second support intermédiaire (84) auquel est solidarisé ledit premier support intermédiaire (78) autorisant un mouvement de rotation dudit premier support intermédiaire (78) selon un premier axe de rotation orbital (82) parallèle et excentré d'une valeur d'excentration E fixe par rapport à l'axe de rotation (72) de l'outil,
- des seconds moyens (87) pour engendrer le mouvement de rotation dudit premier support intermédiaire (78) selon le premier axe de rotation orbital (82),
- des moyens pour générer un mouvement relatif entre l'outil de coupe (68) et la pièce (50),
- des moyens (86) pour engendrer un mouvement de rotation du deuxième support intermédiaire (84) autour d'un second axe de rotation orbital (88) parallèle au premier axe de rotation orbital (82) et excentré par rapport à ce dernier d'une distance f,
**caractérisé en ce que** ladite distance f est réglable en fonction du trou (52) à réaliser et indépendante de l'excentration (E) et **en ce que** le premier support intermédiaire (78) est équilibré de manière statique et/ou dynamique.

10. Dispositif selon la revendication 9, **caractérisé en ce que** le second support intermédiaire (84) est relié à un troisième support intermédiaire (92) par une liaison autorisant deux mouvements de translation selon deux axes perpendiculaires entre eux et perpendiculaires à la direction de l'axe de rotation (72) de l'outil.

11. Dispositif selon la revendication 9 ou 10, **caractérisé en ce que** l'excentration E entre l'axe de rotation (72) de l'outil et le premier axe de rotation orbital (82) est égale à approximativement 0,2 fois le rayon r de l'outil de coupe (68).

12. Dispositif selon l'une des revendications 9 à 11, **caractérisé en ce que** le premier support intermédiaire (78) comprend :
- une électro-broche (96) avec à une première extrémité des premiers moyens d'accouplement pour solidariser l'outil de coupe (68) et à une seconde extrémité des seconds moyens d'accouplement (100),
- une bague excentrique (102) comportant une paroi extérieure (104) cylindrique avec un axe qui correspond au premier axe de rotation orbital (82) et un alésage (106) avec un axe coaxial à l'axe de rotation (72) de l'outil dans lequel sont montés pivotant les seconds moyens d'accouplement (100) de l'électro-broche (96).

13. Dispositif selon la revendication 12, **caractérisé en ce que** l'électro-broche (96) comprend un système anti-rotation (110) pour ne pas pivoter sur elle-même et imposer un mouvement de rotation à l'outil de coupe (68).

## Patentansprüche

1. Verfahren zur Fertigung eines in einer Wand eines Werkstücks (50) mündenden Lochs (54), das darin besteht:
- ein Schneidewerkzeug (68) mit Radius r um eine Drehachse (72) um sich selbst in Drehung zu versetzen,
- die Drehachse (72) des Werkzeugs um eine erste orbitale Drehachse (82) in Drehung zu versetzen, die parallel und um einen festen Exzentrizitätswert E exzentrisch zur Drehachse (72) des Werkzeugs ist,
- eine Relativbewegung zwischen dem Schneidewerkzeug (68) und dem Werkstück (50) zu bewerkstelligen, um auf diese Weise das Schneidewerkzeug (68) mit dem Werkstück (50) zusammenwirken zu lassen, um auf diese Weise ein mündendes Loch zu erhalten,
- die erste orbitale Drehachse (82) um eine zweite orbitale Drehachse (88) in Drehung zu versetzen, die parallel und um eine Entfernung f exzentrisch bezüglich der ersten orbitalen Drehachse (82) ist,
- eine erste Zwischenhalterung (78) zu verwenden, die eine Drehbewegung des Schneidewerkzeugs (68) um dessen Drehachse (72) gestattet, und eine zweite Zwischenhalterung (84) zu verwenden, die eine Drehbewegung der ersten Zwischenhalterung (78) um die erste orbitale Drehachse (82) gestattet,
- das Schneidewerkzeug (68) aus dem mündenden Loch (54) zurückzuziehen,
**dadurch gekennzeichnet, dass** die Entfernung f in Abhängigkeit vom herzustellenden Loch (52) einstellbar und von der Exzentrizität (E) unabhängig ist, wobei die Entfernung f über wenigstens eine Umdrehung beibehalten wird, um auf diese Weise ein Loch mit einem kreisförmigen Rand zu erhalten, und dass die erste Zwischenhalterung (78) statisch und/oder dynamisch ausgeglichen ist.

2. Verfahren zur Fertigung eines mündenden Lochs nach einem der vorhergehenden Ansprüche, **dadurch gekennzeichnet, dass** das Versetzen der zweiten Zwischenhalterung (84) in eine Drehung um die zweite orbitale Drehachse (88) in koordinierten Translationsbewegungen entlang zwei untereinander rechtwinkligen und zur Drehachse (72) des Werkzeugs rechtwinkligen Achsen besteht.

3. Verfahren zur Fertigung eines mündenden Lochs nach Anspruch 1 oder 2, **dadurch gekennzeichnet, dass** dieses darin besteht, ein Vorloch auszubilden und dann die erste orbitale Drehachse (82) über wenigstens eine Umdrehung in Drehung um die zweite orbitale Drehachse (88) zu versetzen.

4. Verfahren zur Fertigung eines mündenden Lochs nach Anspruch 1 oder 2, **dadurch gekennzeichnet, dass** dieses darin besteht, die erste orbitale Drehachse (82) um die zweite orbitale Drehachse (88) in Drehung zu versetzen, bevor eine Relativbewegung zwischen dem Schneidewerkzeug (68) und dem Werkstück (50) bewerkstelligt wird, was dem Schneidewerkzeug gestattet, mit dem Werkstück (50) zusammenzuwirken.

5. Verfahren zur Fertigung eines mündenden Lochs nach Anspruch 1 oder 2, **dadurch gekennzeichnet, dass** dieses darin besteht, die erste orbitale Drehachse (82) um die zweite orbitale Drehachse (88) nach der Ausbildung eines Vorlochs in Drehung zu versetzen, unmittelbar bevor das Schneidewerkzeug (68) aus dem Loch zurückgezogen wird.

6. Verfahren zur Fertigung eines mündenden Lochs nach einem der vorhergehenden Ansprüche, **dadurch gekennzeichnet, dass** die Drehgeschwindigkeit des Schneidewerkzeugs (68) um seine Drehachse (62) größer oder gleich dem 40-fachen der Drehgeschwindigkeit der ersten Zwischenhalterung (78) um die erste orbitale Drehachse (82) ist.

7. Verfahren zur Fertigung eines mündenden Lochs nach einem der vorhergehenden Ansprüche, **dadurch gekennzeichnet, dass** die Drehgeschwindigkeit der ersten Zwischenhalterung (78) um die erste orbitale Drehachse (82) größer oder gleich dem 40-fachen der Drehgeschwindigkeit der zweiten Zwischenhalterung (84) um die zweite orbitale Drehachse (88) ist.

8. Verfahren zur Fertigung eines mündenden Lochs nach einem der vorhergehenden Ansprüche, **dadurch gekennzeichnet, dass** dieses eine Vorstufe aufweist, die darin besteht, den exakten Wert von (E+r) zu bestimmen, wobei r der Radius des Schneidewerkzeugs (68) und E die Exzentrizität zwischen der Drehachse (72) des Werkzeugs und der ersten orbitalen Drehachse (82) ist.

9. Vorrichtung zur Fertigung eines mündenden Lochs mit:
- einem Schneidewerkzeug (68) mit Radius r mit einer Drehachse (72),
- einer ersten Zwischenhalterung (78), an der das Schneidewerkzeug (68) angebracht ist und die eine Drehbewegung des Schneidewerkzeugs (68) um die Drehachse (72) gestattet,
- ersten Mitteln (80), um die Drehbewegung des Schneidewerkzeugs (68) um die Drehachse (72) zu erzeugen,
- einer zweiten Zwischenhalterung (84), an der die erste Zwischenhalterung (78) angebracht ist und die eine Drehbewegung der ersten Zwischenhalterung (78) um eine erste orbitale Drehachse (82) gestattet, die parallel und um einen festen Exzentrizitätswert E exzentrisch bezüglich der Drehachse (72) des Werkzeugs ist,
- zweiten Mitteln (87), um die Drehbewegung der ersten Zwischenhalterung (78) um die erste orbitale Drehachse (82) zu erzeugen,
- Mitteln, um eine Relativbewegung zwischen dem Schneidewerkzeug (68) und dem Werkstück (50) zu erzeugen,
- Mitteln (86), um eine Drehbewegung der zweiten Zwischenhalterung (84) um eine zweite orbitale Drehachse (88) zu erzeugen, die parallel zur ersten orbitalen Drehachse (82) und bezüglich letzterer um eine Entfernung f exzentrisch ist,
**dadurch gekennzeichnet, dass** die Entfernung f in Abhängigkeit vom herzustellenden Loch (52) einstellbar und von der Exzentrizität (E) unabhängig ist, und dass sich die erste Zwischenhalterung (78) statisch und/oder dynamisch ausgeglichen ist.

10. Vorrichtung nach Anspruch 9, **dadurch gekennzeichnet, dass** die zweite Zwischenhalterung (84) mit einer dritten Zwischenhalterung (92) durch eine Verbindung verbunden ist, die zwei Translationsbewegungen entlang zwei untereinander rechtwinkligen und zur Richtung der Drehachse (72) des Werkzeugs rechtwinkligen Achsen gestattet.

11. Vorrichtung nach Anspruch 9 oder 10, **dadurch gekennzeichnet, dass** die Exzentrizität E zwischen der Drehachse (72) des Werkzeugs und der ersten orbitalen Drehachse (82) ungefähr gleich dem 0,2-fachen des Radius r des Schneidewerkzeugs (68) ist.

12. Vorrichtung nach einem der Ansprüche 9 bis 11,
**dadurch gekennzeichnet, dass** die erste Zwischenhalterung (78) aufweist:
- eine Elektrospindel (96), die an einem ersten Ende mit ersten Koppelmitteln zum Anbringen des Schneidewerkzeugs (68) und an einem zweiten Ende mit zweiten Koppelmitteln (100) versehen ist,
- einem exzentrischen Ring (102), der eine zylindrische äußere Wand (104) aufweist, mit einer Achse, die der ersten orbitalen Drehachse (82) entspricht, und eine Bohrung (106) aufweist, mit einer Achse, die mit der Drehachse (72) des Werkzeugs koaxial ist und in der die zweiten Koppelmittel (100) der Elektrospindel (96) verschwenkbar gelagert sind.

13. Vorrichtung nach Anspruch 12, **dadurch gekennzeichnet, dass** die Elektrospindel (96) ein Antirotationssystem (110) aufweist, um sich nicht um sich selbst zu drehen und um eine Drehbewegung auf das Schneidewerkzeug (68) zu übertragen.

## Claims

1. Method for machining a through-hole (54) in a wall of a component (50), comprising:
- setting in rotation on itself a cutting tool (68) of radius r about a rotation axis (72),
- setting said rotation axis (72) of the tool in rotation about a first orbital rotation axis (82) parallel to, and eccentric by an eccentricity value E with respect to, the rotation axis (72) of the tool,
- making the cutting tool (68) and the component effect a movement relative to one another so as to cause the cutting tool (68) to interact with the component in such a way as to obtain a through-hole,
- setting in rotation the first orbital rotation axis (82) about a second orbital rotation axis (88) parallel and eccentric by a distance f with respect to the first orbital rotation axis (82),
- using a first intermediate support (78) that allows the cutting tool (68) a rotational movement about its rotation axis (72) and a second intermediate support (84) that allows the first intermediate support (78) a rotational movement about the first orbital rotation axis (52),
- withdrawing the cutting tool (68) from the through-hole (54),
**characterized in that** said distance f is adjustable as a function of the through-hole (52) to be produced and independent of the eccentricity value (E), said distance f being kept fixed on at least one turn so as to obtain a through-hole with a circular periphery and the first intermediate support (78) is at least one of statically and dynamically balanced.

2. Method for machining a through-hole according to one of the preceding claims wherein the setting the second intermediate support (84) in rotation about the second orbital rotation axis (88) involves coordinated translation movements along two mutually perpendicular axes which are perpendicular to the direction of the rotation axis (72) of the tool.

3. Method for machining a through-hole according to claim 1 or 2, further comprising making a pilot hole then setting the first orbital rotation axis (82) in rotation, over at least one revolution, about the second orbital rotation axis (88).

4. Method for machining a through-hole according to claim 1 or 2, further comprising setting the first orbital rotation axis(82) in rotation about the second orbital rotation axis (88) before causing the cutting tool (68) and the component (50) to move relative to one another to allow the cutting tool (68) to interact with the component (50).

5. Method for machining a through-hole according to claim 1 or 2, further comprising setting the first orbital rotation axis (82) in rotation about the second orbital rotation axis (88) after a pilot hole has been created, just before withdrawing the cutting tool (68) from the through-hole.

6. Method for machining a through-hole according to one of the preceding claims, wherein the rotational speed of the cutting tool(68) about its rotation axis (62) is greater than or equal to forty times the rotational speed of the first intermediate support (78) about the first orbital rotation axis (82).

7. Method for machining a through-hole according to one of the preceding claims, wherein the rotational speed of the first intermediate support (78) about the first orbital rotation axis (82) is greater than or equal to forty times the rotational speed of the second intermediate support (84) about the second orbital rotation axis 88).

8. Method for machining a through-hole according to one of the preceding claims, further comprising a prior step involving determining the exact value of (E + r), where r is the radius of the cutting tool (68) and E is the eccentricity between the rotation axis (72) of the tool and the first orbital rotation axis (82).

9. Device for machining a through-hole, comprising:
- a cutting tool (68) of radius r with a rotation axis (72),
- a first intermediate support(78) to which the cutting tool (68) is secured, allowing the cutting tool (68) a rotational movement about its rotation axis (72),
- first means (80) for generating the rotational movement of the cutting tool (68 about its rotation axis (72),
- a second intermediate support (84) to which the first intermediate support (78) is secured allowing a rotational movement of the first intermediate support (78) about a first orbital rotation axis (82) parallel to, and eccentric by an eccentricity value E with respect to, the rotation axis (72) of the tool,
- second means (87) causing the rotational movement of the first intermediate support (78) about the first orbital rotation axis (82),
- means for causing the cutting tool (68) and the component (50) to move relative to one another, and
- means (68) for causing the second intermediate support (84) to rotate about a second orbital rotation axis (88) parallel to the first orbital rotation axis (82) and eccentric therefrom by a distance f,
**characterized in that** said distance f is adjustable as a function of the through-hole (54) to be produced and independent of the eccentricity value (E), and **in that** the first intermediate support (78) is at least one of statically and dynamically balanced.

10. Device according to claim 9, wherein the second intermediate support (84) is connected to a third intermediate support (92) by a connection that allows two translational movements along two mutually perpendicular axes that are perpendicular to the direction of the rotation axis (72) of the tool.

11. Device according to claim 9 or 10, wherein the eccentricity E between the rotation axis (72) of the tool and the first orbital rotation axis (82) is equal to approximately 0.2 times the radius r of the cutting tool (68).

12. The device according to one of the claims 9 to 11, wherein the first intermediate support (78)comprises:
- an electric spindle(96) which at a first end has first coupling means for attaching the cutting tool (68) and at a second end has coupling means (100),
- an eccentric ring (102) comprising an exterior wall (104) that is cylindrical with an axis that corresponds to the first orbital rotation axis (82) and a bore (106) with an axis that is coaxial to the rotation axis (72) of the tool, in which bore the second coupling means (100) of the electric spindle (96) are mounted such that they can pivot.

13. The device according to claim 12, wherein the electric spindle (96) comprises a rotation-prevention system (110) so that the electric spindle (96) does not pivot on itself and cause the cutting tool (68) to effect a rotational movement.
